# EUROPÄISCHE PATENTSCHRIFT

(11) **EP 0 587 977 B1**
(45) Veröffentlichungstag und Bekanntmachung des Hinweises auf die Patenterteilung: **02.10.1996**
(21) Anmeldenummer: 93104604.9
(22) Anmeldetag: 20.03.1993
(51) Int. Cl.: B65G 1/02, E04B 1/00, E04H 5/00

(54) **Stahlbau-Fachwerk**
Steel structure-framework
Charpente en acier

(30) Priorität: 17.09.1992 DE 9212549 U
(43) Veröffentlichungstag der Anmeldung: 23.03.1994
(73) Patentinhaber: Peter, Gerd, D-74080 Heilbronn (DE)
(72) Erfinder: Peter, Gerd, D-74080 Heilbronn (DE)
(74) Vertreter: Müller, Hans, Dipl.-Ing.

(56) Entgegenhaltungen:
- EP-A- 0 391 048
- WO-A-89/05595
- US-A- 3 101 817

## Beschreibung

### TECHNISCHES GEBIET

Die Erfindung betrifft ein Stahlbau-Fachwerk, wie es beispielsweise für ein Hochregallager verwendet wird. Dieses Stahlbau-Fachwerk stellt bei einem derartigen Hochregallager die Stützenkonstruktion dar.

### STAND DER TECHNIK

Aus der EP-A 0 391 048 ist eine Stahlbaukonstruktion für ein Hochregallager bekannt. Diese gattungsgemäße Stahlbaukonstruktion besitzt Stützen aus kaltgewalzten C-Profilen, ferner in Längsrichtung zwischen den Stützen vorhandene Z-Profile, die mit ihren schrägen Stegen auf an den Stützen befestigten Konsolen befestigt sind, und Aussteifungsträger in Feldmitte zwischen den Stützen.

Die Verwendung von kaltgewalztem Stahl ermöglicht eine Gewichtsreduzierung gegenüber warmgewalzten Stahl zwischen 20 und 40 Prozent. Dies bedeutet nicht nur entsprechend niedrigere Materialkosten, sondern auch einen wesentlich günstigeren Montageaufwand.

Aus der US-A 3 101 817 ist ein Paneelwand-Regalsystem bekannt, bei dem Z-Profile als Ständerprofile verwendet sind.

### DARSTELLUNG DER ERFINDUNG

Ausgehend von diesem vorbekannten Stand der Technik liegt der Erfindung die Aufgabe zugrunde, ein Stahlbau-Fachwerk anzugeben, dessen Herstell- und Montagekosten möglichst gering sind.

Diese Erfindung ist durch die Merkmale des Hauptanspruchs gegeben. Sie zeichnet sich dementsprechend ausgehend von dem bekannten Stahlbau-Fachwerk dadurch aus, daß nunmehr auch die Stützenprofile als kaltgewalzte Z-Profile ausgebildet sind. Dadurch ist nochmals eine weitere Gewichtsreduzierung gegenüber bekannten Stahlbau-Fachwerken möglich. So können beispielsweise bei vergleichbaren C- und Z-Querschnittsprofilen und bei vergleichbarem Fertigungsaufwand die Z-Stützen höhere vertikale Lasten übernehmen. Dies bedeutet auch, daß bei gleichen Lasten die Querschnittsflächen von Z-Stützen etwa 20 Prozent kleiner sein können. Dies hat dann unmittelbar eine Ersparnis im Stützengewicht von ebenfalls 20 Prozent zur Folge.

Das erfindungsgemäß verwendete Z-Profil hat einen schrägen Steg, an dessen beiden Enden jeweils parallel zueinander ausgerichtete Flansche angeformt sind. Die Endseiten der Flansche weisen jeweils Umbiegungen auf, die aufeinander zugerichtet und parallel zueinander ausgerichtet sind. Bei einem derartigen Z-Profil, das sowohl für die Längsprofile mit ihrem oberen Schrägstegwinkel von etwa 30 Grad als auch für die Stützen mit ihrem oberen Schrägstegwinkel beispielsweise von 30 bis 60 Grad, vorzugsweise von etwa 48 Grad verwendet wird, können beispielsweise U- oder C-Diagonale, die gleichzeitig die Funktion von Aussteifungsprofilen zwischen den Z-Stützprofilen übernehmen, problemlos angeschweißt werden. Andererseits lassen sich an diese Z-Profile auch ohne besonderen Aufwand Konsolen mit einer der Neigung der schrägen Stege der Z-Profile angepaßter Auflagerfläche anschweißen. Eine derartige Schweißkonstruktion aus zusammengeschweißten Z-Stützenprofilen, angeschweißten Konsolen und aussteifenden Stützendiagonalen läßt sich fabrikmäßig wirtschaftlich günstig vorfertigen und zum jeweiligen Verwendungsort als Einheit hintransportieren. An dem Verwendungsort, beispielsweise an der Stelle eines zu errichtenden Hochregallagers, werden dann mehrere derartige Fachwerke durch auf den Konsolen zusätzlich angeschraubte Z-Längsprofile zu einem räumlichen, kastenförmigen Stützenkörper verbunden. Auf diese Weise lassen sich räumliche Stützenanordnungen wirtschaftlich einfach herstellen.

Weitere Ausgestaltungen und Vorteile der Erfindung ergeben sich durch die in den Unteransprüchen ferner angegebenen Mermale sowie durch das nachfolgende Ausführungsbeispiel.

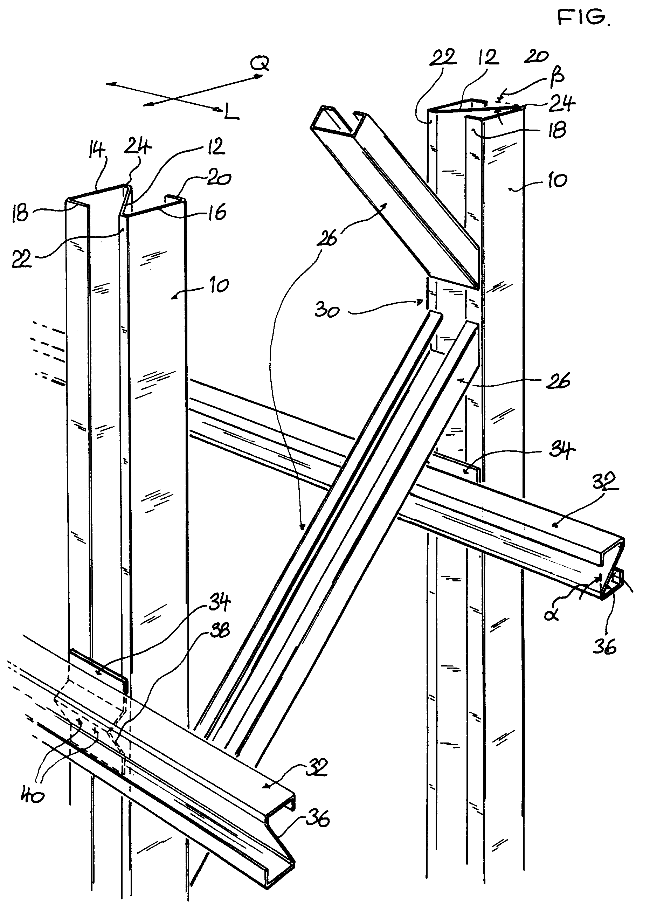

### KURZE BESCHREIBUNG DER ZEICHNUNG

Die Erfindung wird im folgenden anhand des in der Zeichnung dargestellten Ausführungsbeispiels näher beschrieben und erläutert. Die einzige Figur zeigt ausschnittsweise ein Stahlbau-Fachwerk nach der Erfindung.

### WEGE ZUR AUSFÜHRUNG DER ERFINDUNG

Das in der einzigen Figur ausschnittsweise dargestellte Stahlbau-Fachwerk besitzt zwei in Querrichtung Q eines beispielsweise Hochregallagers nebeneinander angeordnete Stützen 10, die aus kaltgewalzten Z-Profilen bestehen. Der Z-Querschnitt ist derart doppelsymmetrisch, daß sein Schubmittelpunkt mit seinem auf dem schrägen Steg 12 liegenden Schwerpunkt zusammenfällt. So sind seine beiden Flansche 14, 16 parallel zueinander und in Querrichtung Q ausgerichtet. An den freien Enden dieser beiden Flansche 14, 16 sind Abbiegungen 18, 20 vorhanden, die in Längsrichtung L und damit senkrecht zu den Flanschen 14, 16 verlaufen. Die Flansche 14, 16 sind ihrerseits über in Längsrichtung L verlaufende kurze Wandteile 22, 24 mit dem schrägen Steg 12 verbunden. Bei den beiden Stützen 10 sind die Querschnitte so angeordnet, daß die beiden Stege 12 schräg aufeinander zulaufen.

Die beiden Stützen 10 sind durch in der Querrichtung Q verlaufende Diagonalen 26 miteinander verbunden. Die Enden dieser Diagonalen 26 sind an den Stützen 10 angeschweißt. Auch die Diagonalen 26 bestehen aus kaltgewalztem Stahl. Die Schweißverbindungen zwischen den Profilen 26 und der jeweiligen Stütze 10 erfolgen im Bereich der Umbiegung 18 bzw. 20 und dem geraden Wandstück 22 bzw. 24. Die Diagonalen 26 bewirken damit auch, daß die zugehörigen Stützen-Z-Profile gegenseitig gegen Verdrehen gehalten werden.

Unterhalb und oberhalb einer Knotenausbildung 30 mit zwei Diagonalen 26 sind in Längsrichtung L verlaufende Längsträger 32 vorhanden, die ebenfalls aus kaltgewalzten Z-Profilen bestehen. Diese Z-Profile 32 sind ähnlich wie die Stützenprofile 10 geformt, jedoch mit verschiedenen oberen Schrägstegwinkeln von im vorliegenden Beispielsfall α etwa 30 Grad (32) bzw. β etwa 48 Grad (10).

Jedes der Z-Profile 32 ruht auf einer Konsole 34 auf, die ähnlich wie die Diagonalen 26 an den Umbiegungen 18 und den ebenen Wandteilen 22 angeschraubt sind. Diese Konsolen bewirken damit ähnlich wie die Diagonalen 26, daß der an sich offene Querschnitt der Stützenprofile 10 sich unter Last nicht aufbiegt. Die jeweils in derselben Neigung wie die Stege 36 der Längsprofile 32 an einer Konsole 34 vorhandene Auflagerfläche 38 ist über Schraubverbindungen 40 mit dem Steg 36 verschraubt. Die Anzahl und Ausrichtung dieser Schrauben 40 ist von den Abmessungen des Steges 36, der Längsprofile 32 und der auftretenden Belastung durch diese Z-Profile 32 abhängig.

Ein derartiges Stahlbau-Fachwerk aus kaltgewalzten Profilen beinhaltet ein optimal kleines Fachwerk-Gewicht. Dadurch ist es möglicht, bei gegebenen Belastungen mit extrem niedrigen Konstruktionsgewichten für die Fachwerk-Konstruktion auszukommen.

Während im vorstehenden eine Stützenkonstruktion ausschnittsweise dargestellt ist, läßt sich dieselbe Profilanordnung auch für einen Fachwerk-Binder verwenden. Die beiden Stützenprofile 10 würden dann den Ober- und Untergurt dieses Fachwerk-Binders darstellen. Die Diagonalen 26 wären ebenfalls Diagonalen, während die Längsträger 32 bei dem Fachwerk-Binder dann beispielsweise Dachträger (Pfetten) oder sonstige Längsträger sein könnten.

Selbstverständlich ist es möglich, sonstige statisch erforderliche Profile an der Fachwerk-Konstruktion zusätzlich anzubringen. Der Ort dieser Anbringung und die Auswahl der jeweils noch erforderlichen Profile würde dann von dem Verwendungszweck der betreffenden Fachwerkkonstruktion und den auftretenden Belastungen abhängig sein.

## Patentansprüche

1. Stahlbau-Fachwerk, mit
- zumindest zwei Reihen von kaltgewalzten, sich gegenüberliegenden Stützenprofilen (10),
- kaltgewalzten Z-Längsprofilen (32) zwischen den Stützenprofilen (10) jeder Reihe, die mit ihren schrägen Stegen (36) auf an den Stützen angeschweißten Konsolen (34) verschraubt sind,
- Aussteifungsprofilen zwischen den Z-Längsprofilen,
**dadurch gekennzeichnet,** daß
- auch die Stützenprofile (10) Z-Profile sind, wobei das Z-Profil einen schrägen Steg (12), daran angeformte, parallel zueinander ausgerichtete Flansche (14, 16) mit endseitigen Umbiegungen (18, 20) enthält, die endseitigen Umbiegungen (18,20) parallel zu den Z-Längsprofilen (32) verlaufen und sich gegenüberliegende Z-Profile zweier Reihen durch eingeschweißte Aussteifungsdiagonalen (26) miteinander verbunden sind.

2. Fachwerk nach Anspruch 1,
**dadurch gekennzeichnet,** daß
die Aussteifungsdiagonalen (26) aus kaltgewalztem Stahl bestehen.

3. Fachwerk nach Anspruch 2,
**dadurch gekennzeichnet,** daß
die Aussteifungsdiagonalen (26) aus C- oder U-Profilen bestehen.

4. Fachwerk nach einem der vorstehenden Ansprüche,
**dadurch gekennzeichnet,** daß
der Schrägstegwinkel β des Stützenprofils (10) etwa zwischen 30 Grad und 60 Grad liegt.

## Claims

1. Structural steel framework comprising
- at least two rows of cold-rolled column sections (10) situated opposite one another
- cold-rolled longitudinal Z-sections (32) which are arranged between the column sections (10) of each row and whose inclined webs (36) are bolted on brackets (34) welded to the columns,
- stiffening sections between the longitudinal Z-sections,
characterized in that
- the column sections (10) are also Z-sections, the Z-section containing an inclined web (12), flanges (14, 16) which are formed thereon and aligned parallel to one another and have bent-over ends (18, 20), the bent-over ends (18, 20) extending parallel to the longitudinal Z-sections (32), and Z-sections situated opposite one another in two rows being joined to one another by welded-in stiffening diagonals (26).

2. Framework according to Claim 1, characterized in that the stiffening diagonals (26) consist of cold-rolled steel.

3. Framework according to Claim 2, characterized in that the stiffening diagonals (26) consist of C-sections or channel sections.

4. Framework according to one of the preceding claims, characterized in that the inclined web angle β of the column section (10) is approximately between 30 degrees and 60 degrees.

## Revendications

1. Charpente en acier comprenant :
- au moins deux rangées de profilés de soutien (10) laminés à froid et se faisant face,
- des profilés longitudinaux en Z laminés à froid (32) entre les profilés de soutien (10) de chaque rangée, qui sont vissés par leurs ailes inclinées (36) sur des consoles (34) soudées aux supports,
- des profilés de raidissement entre les profilés longitudinaux en Z,
caractérisée en ce que les profilés de soutien (10) sont également des profilés en Z, le profilé en Z comportant une aile inclinée (12) et des brides parallèles entre elles (14, 16) et munies de courbures (18,20) situées aux extrémités, qui sont formées sur l'aile, en ce que les courbures situées aux extrémités (18,20) s'étendent parallèlement aux profilés longitudinaux en Z (32) et en ce que deux profilés en Z se faisant face et appartenant chacun à une rangée sont reliés entre eux par des diagonales de raidissement soudées (26).

2. Charpente selon la revendication 1, caractérisée en ce que les diagonales de raidissement (26) sont composées d'acier laminé à froid.

3. Charpente selon la revendication 2, caractérisée en ce que les diagonales de raidissement (26) sont composées de profilés en C ou en U.

4. Charpente selon l'une des revendications précédentes, caractérisée en ce que l'angle β de l'aile inclinée du profilé de soutien (10) est approximativement compris entre 30 et 60 degrés.
